# EUROPÄISCHE PATENTSCHRIFT

(11) **EP 1 069 968 B1**
(45) Veröffentlichungstag und Bekanntmachung des Hinweises auf die Patenterteilung: **12.11.2003**
(21) Anmeldenummer: 99922065.0
(22) Anmeldetag: 23.03.1999
(51) Int. Cl.: B23K 35/363

(54) **NEUE FLUSSMITTEL**
NEW FLUXING AGENTS
NOUVEAUX FLUX

(30) Priorität: 25.03.1998 DE 19813023
(43) Veröffentlichungstag der Anmeldung: 24.01.2001
(73) Patentinhaber: Solvay Fluor und Derivate GmbH, 30173 Hannover (DE)
(72) Erfinder: SESEKE-KOYRO, Ulrich, D-34246 Vellmar (DE); FREHSE, Joachim, D-30625 Hannover (DE); BECKER, Andreas, D-29331 Lachendorf (DE)
(74) Vertreter: Gosmann, Martin, Dr.
(86) Internationale Anmeldenummer: DE9900851
(87) Internationale Veröffentlichungsnummer: WO99048641

(56) Entgegenhaltungen:
- EP-A- 0 131 444
- EP-A- 0 399 050
- EP-A- 0 659 519
- GB-A- 1 438 955
- US-A- 4 906 307
- PATENT ABSTRACTS OF JAPAN vol. 015, no. 283 (M-1137), 18. Juli 1991 (1991-07-18) & JP 03 099795 A (FURUKAWA ALUM CO LTD), 24. April 1991 (1991-04-24) in der Anmeldung erwähnt
- PATENT ABSTRACTS OF JAPAN vol. 011, no. 175 (M-596), 5. Juni 1987 (1987-06-05) & JP 62 006774 A (TOYOTA CENTRAL RES & DEV LAB INC), 13. Januar 1987 (1987-01-13)
- PATENT ABSTRACTS OF JAPAN vol. 011, no. 160 (M-592), 23. Mai 1987 (1987-05-23) & JP 61 293699 A (TOYOTA CENTRAL RES & DEV LAB INC), 24. Dezember 1986 (1986-12-24)

## Beschreibung

Die Erfindung bezieht sich auf neue Flußmittel zum Löten von Aluminium und Aluminiumlegierungen, ein Lötverfahren und gelötete Bauteile.

Baugruppen (beispielsweise Kühler für Automotoren oder Wärmetauscher) von Teilen aus Aluminium oder Aluminiumlegierungen können durch Verlöten (Hartlöten) dieser Teile hergestellt werden. Mit Vorteil verwendet man ein Flußmittel auf Basis von Fluoraluminat, welches die Oberfläche der miteinander zu verlötenden Bauteile von oxidischen Anhaftungen befreit. Flußmittel auf Basis von Kaliumfluoraluminat eignen sich besonders gut für Aluminium oder magnesiumarme Aluminiumlegierungen. Ein solches Verfahren wird im britischen Patent 1 438 955 offenbart. Die Herstellung von entsprechenden Flußmitteln wird beispielsweise von Willenberg, US-A 4,428,920 und Meshri, US-A 5,318,764 sowie von Kawase, US-A 4,579,605 beschrieben.

Flußmittel, die Fluoraluminate des Cesiums enthalten, sind beispielsweise bei Suzuki, US-A 4,670,067 und Shimizu, US-A 5,171,377 beschrieben. Derartige Flußmittel, die zusätzlich auch Kaliumfluoraluminat-Flußmittel enthalten können, sind besonders gut geeignet zum Verlöten von Aluminiumlegierungen mit höherem Magnesiumgehalt.

Das US-Patent 4,906,307 offenbart ein Verfahren zum Verlöten von Bauteilen aus Aluminiumlegierungen. Gemäß einer Ausführungsform ist vorgesehen, ein Flußmittel zu verwenden, welches K₂SiF₆, ZnF₂, NaF und AlF₃ enthält. Es werden lotplattierte Bauteile verlötet.

JP 626774 offenbart ein Verfahren zum Löten von Aluminiumbauteilen, wobei zunächst die zu verlötenden Bauteile in eine Suspension getaucht und danach verlötet werden. Die Suspension enthält pulverförmiges Kaliumfluorzinkat und/oder Zinkfluorid und F-, K- und Zn-Ionen. Gemäß JP 626774 ist die Ausbildung einer Zinkdiffusionsschicht auf der gesamten Oberfläche des Lötobjektes erfindungswesentlich. JP 399795 offenbart ein Flußmittel zum Löten von Aluminium in der Dampfphase.

Beim Verlöten geht man so vor, daß man auf die zu verbindenden Bauteile das Flußmittel (beispielsweise in Form einer Aufschlämmung) sowie ein Lotmetall aufbringt. Die Bauteile werden in der gewünschten Position zusammengefügt und erhitzt. Zunächst schmilzt das Flußmittel und reinigt die Oberfläche, dann schmilzt das Lot. Anschießend läßt man die Teile abkühlen.

Die US-A 5,190,596 lehrt, daß man dem Flußmittel anstelle eines Lotmetalls ein Metall zusetzen kann, welches beim Löten mit dem Aluminium ein Eutektikum bildet. Geeignete Metalle sind Kupfer, Zink und Germanium, insbesondere Silicium.

Der Zusatz von bestimmten Metallfluorsilikaten in bestimmten Mengen kann das Lotmetall überflüssig machen (siehe EP-A 810 057 und die deutsche Patentanmeldung 196 36 897.9). In der letzteren Patentanmeldung wird offenbart, daß ein Gemisch von Kaliumfluoraluminat-Flußmittel und Kaliumfluorsilikat, in welchem das Kaliumfluorsilikat in einer Menge von 6 bis 50 Gew.-% enthalten ist, ein Lotmetall entbehrlich macht.

In der eingangs erwähnten britischen Patentschrift 1,438,955 wird erläutert, daß kleinere Mengen von Alkalimetallzinkfluoriden, bis hin zu 5 Mol-%, im Flußmittel toleriert werden können. Ihre Anwesenheit bringe jedoch keinerlei Vorteile in bezug auf die Senkung des Schmelzpunktes, alle hätten vielmehr den Effekt, den Schmelzpunkt anzuheben. Haramaki, US-A 4,645,119 offenbart Flußmittel auf Basis von Kaliumfluoraluminat, welche 3 bis 30 Gew.-% ZnF₂, gegebenenfalls in Form von KZnF₃ enthalten. Das Zinkfluorid zersetzt sich bei der Löttemperatur, und das metallische Zink bedeckt die gelöteten Teile oder die ganze Oberfläche der miteinander zu verlötenden Bauteile und verleiht dem Aluminium einen verbesserten Korrosionsschutz.

Aufgabe der vorliegenden Erfindung ist es, ein neues Anwendungsverfahren sowie neue, dafür verwendbare Flußmittel zur Verfügung zu stellen. Diese Aufgabe wird durch das erfindungsgemäße Verfahren, nach Anspruch 1 und die Flußmittel nach den Ansprüchen 14, 15 und 17 gelöst.

Das erfindungsgemäße Verfahren zum Löten von Aluminium und Aluminiumlegierungen unter Verwendung eines Flußmittels auf Basis von komplexen Fluoriden sieht vor, daß das Flußmittel in fester Form oder als organische Suspension aufgebracht wird und Alkalifluorzinkat oder Gemische von Alkalifluorid und Zinkfluorid als Flux enthält und man bei einer Temperatur im Bereich von 420 bis 590 °C lötet, wobei Alkali, Kalium, Cesium oder Rubidium bedeutet.

Daß Alkalifluorzinkat bzw. Gemische von Alkalifluorid und Zinkfluorid bei diesen Temperaturen eine Flußmittelwirkung aufweisen, ist eine unerwartete Erkenntnis. Überraschenderweise wirken Alkalifluorzinkate jedoch als Flußmittel, auch wenn man das Verlöten bei Temperaturen durchführt, die weit unterhalb des Schmelzpunktes des verwendeten Alkalifluorzinkats liegen. Die Schmelzpunkte von KZnF₃ und K₂ZnF₄ liegen z. B. bei 870 °C und 737 °C, es dürfte also bei Temperaturen unterhalb von 600 °C gar nicht zu einem Lötvorgang kommen. Es bietet sich folgende Erklärung an: in Anwesenheit lotbildender Komponenten wie z. B. Silicium bildet sich ein Al-Si-Eutektikum. Dies generiert aufgrund elektrochemischer Vorgänge ein Alkalifluoraluminat-Flußmittel in situ; beispielsweise wird angenommen, daß KZnF₃+Al (aus der Al-Si-Legierung) sich unter Bildung von KAlF₄ oder KF und AlF₃ und Zn-Metall umsetzt. Dies ist allerdings nur ein Erklärungsversuch, der die Phänomene wie den Lötvorgang und die Bildung von Zn erklären könnte.

Gemische von Alkalifluorid (bzw. Alkalifluoriden) und Zinkfluorid ergeben brauchbare Lötungen. Das Molverhältnis von Alkalifluorid zu Zinkfluorid kann im Bereich etwa 1:1 liegen, z. B. von 1:1,05 bis 1,05:1. Es kann aber auch eine der beiden Komponenten im größeren Überschuß vorliegen, besonders das Zinkfluorid. Bevorzugt setzt man allerdings Alkalifluorzinkate ein, denn sie ergeben bessere Lötungen.

Der Begriff "Alkalifluorzinkat" im Rahmen der vorliegenden Erfindung umfaßt Verbindungen der allgemeinen Formel (MF)ₓ·(ZnF₂)_{y}, wobei M = K, Rb, Cs und 0>x≥4 sowie 0>y≥4. "Alkalifluorid" umfaßt die Fluoride von Kalium, Rubidium und Cesium.

Bevorzugt sind x und y ganze Zahlen, nämlich unabhängig voneinander 1, 2,3 oder 4; x und y können aber auch in einem substöchiometrischen Verhältnis zueinander stehen. Entweder x, y oder beide sind dann zwar größer als 0, stellen aber keine ganze Zahl dar. In diesem Fall ist es bevorzugt, wenn y größer ist als x.

Der Begriff "Flußmittel" umfaßt im Rahmen der vorliegenden Erfindung jene Verbindungen, welche die beim Löten erwünschte oberflächenreinigende Wirkung (insbesondere Entfernung oxidischer Schichten) aufweisen. Das Flußmittel kann aus Alkalifluorzinkat bestehen; andere Flußmittel sind dann nicht enthalten. Das Flußmittel kann auch andere Flußmittel neben Alkalifluorzinkat aufweisen. Beispielsweise kann das Flußmittel eine Mischung von Alkalifluorzinkat mit Alkalifluoraluminat, beispielsweise Kaliumfluoraluminat und/oder Cesiumfluoraluminat, darstellen. Das Alkalifluorzinkat kann als reine Verbindung oder als Gemisch von Alkalifluorzinkaten vorliegen. Beipielsweise kann man reines Kaliumfluorzinkat oder reines Cesiumfluorzinkat einsetzen. Dabei kann es sich um Verbindungen handeln, die in einer oder mehreren Phasen vorliegen. Beispielsweise kann man reines KZnF₃ oder aber Gemische von KZnF₃ und K₂ZnF₄ einsetzen. Man kann aber auch entsprechende Gemische mit verschiedenen Alkalimetallkationen verwenden.

Bevorzugte Fluorzinkate sind Kaliumfluorzinkat und Cesiumfluorzinkat. Diese können natürlich auch als Gemisch enthalten sein.

Sofern Cesiumfluorzinkat als einziges Fluorzinkat im Flußmittel enthalten ist, liegt es in einer Menge von 5 oder mehr Gew.-% vor. Vorzugsweise ist das Alkalifluorzinkat in einer Menge von mehr als 30 Gew.-% insbesondere in einer Menge von 50 oder mehr Gew.-% im Flußmittel enthalten. Die Prozentangaben beziehen sich auf das als 100 Gew.-% gesetzte Flußmittel. Sofern es sich nicht um reine Alkalifluorzinkat-Flußmittel handelt, stellen andere Flußmittel den Rest auf 100 Gew.-% des Gemisches dar, insbesondere Flußmittel auf Basis von Kalium- und/oder Cesiumfluoraluminat.

Das Flußmittel kann vielfach als solches, ohne Zusatz von Hilfsstoffen, eingesetzt werden. Beispielsweise können lotplattierte Aluminiumbleche mit reinem Flußmittel verlötet werden. Neben dem Flußmittel können anwendungsfertige Zusammensetzungen gewünschtenfalls Hilfsstoffe umfassen. Das Flußmittel kann auch Hilfsstoffe enthalten wie Bindemittel, Dispergiermittel, Lotmetall, Lotmetall-Vorstufen, lotbildende Materialien wie Metallfluorsilikate, insbesondere Alkalifluorsilikate, oder Stabilisatoren. Im erfindungsgemäßen Verfahren sind Flußmittel aus reinem Alkalimetallfluorzinkat sowie Flußmittel, die zusätzlich Kaliumfluoraluminat und/oder Hilfsstoffe enthalten, sehr gut anwendbar.

Sofern Bindemittel im Flußmittel enthalten ist, ist es zweckmäßig in einer Menge von 10 bis 90 Gew.-% enthalten. Sofern Lotmetall im Flußmittel enthalten ist, ist es zweckmäßig in einer Menge von 25 bis 75 Gew.-% enthalten. Das Flußmittel kann wie in den US-Patenten 5,100,048 und 5,190,596 beschrieben, lotbildende Metalle wie Silicium, Kupfer oder Germanium beigemischt enthalten. Diese sind dann in einer Menge von ca. 10 bis ca. 80 Gew.-% enthalten. Die vorstehend beschriebenen Mengenangaben können auch unter- oder überschritten werden. Die effektiv wirksame Mindest- oder Maximalmenge kann durch Handversuche (Lötversuche) ermittelt werden.

Als Lotmetall-Vorstufe kann auch Metallfluorsilikat, wie Alkalifluorsilikat, beispielsweise Kaliumhexafluorsilikat enthalten sein. Sofern es enthalten ist, liegt die Menge zweckmäßig im Bereich von 5 bis 95 Gew.-%.

Die vorstehenden Prozentangaben beziehen sich auf das als 100 Gew.-% gesetzte gesamte Flußmittel.

Wie in der DE-Anmeldung 196 36 897.9 gezeigt wird, kann lotfrei gelötet werden, wenn mindestens 6 Gew.-% K₂SiF₆ im Flußmittel enthalten sind. Das gleiche trifft laut EP-A 810 057 für Flußmittel zu, die 7 bis 15 Gew.-% Metallfluorsilikate wie Cs₂SiF₆, CsHSiF₆, oder CsKSiF₆ enthalten. Bei K₂SiF₆ sind hierfür 25 bis 50, ja sogar bis 75 Gew.-% vorteilhaft. Aber auch wenn Metallfluorsilikate in geringen Mengen im Flußmittel enthalten sind, beispielsweise in einer Menge von 1 bis weniger als 6 Gew.-%, werden die Flußmitteleigenschaften hinsichtlich der Benetzungseigenschaften der zu lötenden Oberfläche, aber auch der Schmelzpunkt des Flußmittels positiv beeinflußt.

Bei einem geplanten Einsatz des Flußmittels in Form einer Aufschlämmung können auch noch Dispergiermittel enthalten sein, die die Suspension stabilisieren.

Das Flußmittel kann in bekannter Weise auf die zu verbindenden Bauteile aus Aluminium oder Aluminiumlegierungen aufgebracht werden. Die Trockenapplikation auf Basis von elektrostatischer Sprühtechnologie ist aufgrund der guten Fluidisierungseigenschaften der Flußmittel möglich. Alternativ kann man das Flußmittel in Form von organischen Suspensionen auf die zu verbindenden Werkstoffe applizieren. Organische Aufschlämmungen enthalten zweckmäßig 15 bis 75 Gew.-% des Flußmittels. Man kann auch Suspensionen des Flußmittels in organischen Flüssigkeiten, zweckmäßig die üblicherweise als organische Lösungsmittel verwendete Substanzen wie Alkohole, insbesondere Methanol, Ethanol, Propanol oder Isopropanol sowie Polyole einsetzen. Andere organische Flüssigkeiten ("carrier") sind Ether, z. B. Diethylenglycolmonobutylether, Ketone wie Aceton, Ester von Alkoholen, Diolen oder Polyolen. Mittels Filmbildnern, gewöhnlich Polymere, die in organischen Lösemitteln, z. B. Aceton, löslich sind, können Flußmittel mit gegebenenfalls Lot oder Lot-Vorstufe auf das Werkstück aufgebracht werden und ergeben nach dem Verdampfen des Lösemittels einen fest haftenden Film. Geeignete Polymere sind z. B. (Meth-)Acrylate. Beim Löten verdampft der Filmbildner dann.

Bei der Anwendung kann das Lotmetall, sofern benötigt, im Flußmittel enthalten sein (als beigemischtes Pulver), es kann als Plattierung auf den zu verlötenden Bauteilen bereits aufgebracht sein oder zusätzlich zum Flußmittel aufgebracht werden.

Die Löttemperatur ist abhängig vom verwendeten Lot oder dem lotbildenden Metall oder Stoff. Unterhalb einer Lotmetall-Liquidustemperatur von 450 °C spricht man definitionsgemäß vom Weichlöten (= "soldering"), darüber hinaus vom Hartlöten (= "brazing"). Es gibt niedrigschmelzende Lote, wie z. B. Zink-Aluminium-Lote, die bereits ab 390 °C oder reines Zink-Lot, das bereits ab 420 °C zum Verlöten verwendet werden kann. Andere Lote können bei höherer Temperatur verlötet werden. Al-Si-[Cu]-Lote kann man ab [530 °C] bzw. 575 °C verwenden.

Erfindungsgemäß lötet man bei 420 bis 590 °C. Dabei herrscht Umgebungsdruck. Ein Löten, z. B. im Vakuum, unter Verdampfen des Flußmittels, wie in der JP-A 03/099 795 beschrieben, fällt nicht unter die vorliegende Erfindung. Man kann Flammen- oder Ofen-löten, insbesondere in inerter Atmosphäre (z. B. N₂-Atmosphäre).

Für das erfindungsgemäße Verfahren kann man bekannte Flußmittel einsetzen. Die japanische Anmeldung 71/293 699 offenbart beispielsweise Flußmittel bestehend aus Kaliumfluorzinkat in einem bestimmten molaren Verhältnis. Die US-A 4,645,119 offenbart ein Flußmittel auf Basis von Kaliumfluoraluminat, welches auch Kaliumfluorzinkat enthält. Das Kaliumfluorzinkat wurde als Zusatz zur Korrosionsverbesserung eingesetzt, nicht als Flußmittel. Die europäische Patentanmeldung EP-A-0 659 519 offenbart ein Flußmittel zum Aluminiumlöten, welches Kaliumfluorid, Zinkfluorid und Aluminiumfluorid innerhalb bestimmter Bereiche enthält. Möglicherweise sind hier Kaliumfluorzinkate enthalten.

Im folgenden werden neue Flußmittel beschrieben, die im erfindungsgemäßen Verfahren brauchbar sind und ebenfalls Gegenstand der Erfindung sind.

Ein Gegenstand der Erfindung ist ein Flußmittel, brauchbar zum Löten von Aluminium und Aluminiumlegierungen, welches Cesiumfluorzinkat und Lotmetall-Vorstufe ausgewählt aus der Gruppe bestehend aus Silicium, Kupfer und Alkalimetallfluorsilikat enthält sowie gegebenenfalls Alkalimetallfluoraluminat und gegebenenfalls Hilfsmittel oder daraus besteht, wobei Alkali Kalium, Cesium und Rubidium bedeutet. Gewünschtenfalls können übliche Hilfsstoffe wie Binder, Träger oder Stabilisator enthalten sein. Bereits ab 2 Gew.-% Cesiumfluorzinkat sind schon positive Einflüsse auf das Lötverhalten feststellbar. Die Hilfsmittel, beispielsweise Binder, können in einer Menge von 10 bis 90 Gew.-%, bezogen auf das Gesamtgewicht des Flußmittels enthalten sein. Das Flußmittel enthält gemäß einer Ausführungsform 5 bis 95 Gew.-% Cesiumfluorzinkat (als einzigen flußmittelwirksamen Bestandteil) und 5 bis 95 Gew.-% Lotmetall-Vorstufe ausgewählt aus der Gruppe bestehend aus Silicium, Kupfer und Alkalimetallfluorsilikat, oder es besteht aus ihnen, wobei Alkali Kalium, Cesium oder Rubidium bedeutet.

Sofern zusätzlich zum Cesiumfluorzinkat und Lotmetall-Vorstufe ausgewählt aus der Gruppe bestehend aus Silicium, Kupfer und Alkalimetallfluorsilikat noch Alkalifluoraluminat im Flußmittel enthalten ist, betragen die Mengen vorzugsweise 5 bis 90 Gew.-% Cesiumfluorzinkat, 5 bis 90 Gew.-% Lotmetall-Vorstufe und 5 bis 90 Gew.-% Alkalifluoraluminat. Das Flußmittel kann aus diesen Bestandteilen bestehen, oder es können Hilfsmittel in einer Menge von 10 bis 90 Gew.-%, bezogen auf das Gesamtgewicht des Flußmittels, enthalten sein. Gemäß einer besonders bevorzugten Ausführungsform enthält das Flußmittel Cesiumfluorzinkat, Alkalifluoraluminat sowie mindestens eine Lotmetall-Vorstufe ausgewählt aus der Gruppe bestehend aus Silicium, Kupfer und Alkalimetallfluorsilikat, wobei Alkali Kalium, Cesium oder Rubidium bedeutet.

Das Flußmittel kann aus den vorgenannten Bestandteilen bestehen. Das Cesiumfluorzinkat ist bevorzugt in einer Menge von 2 bis 20 Gew.-%, das Alkalimetallfluoraluminat in einer Menge von 20 bis 80 Gew.-% und die Lotmetall-Vorstufe in einer Menge von 10 bis 50 Gew.-% im Flußmittel enthalten. Gewünschtenfalls können übliche Hilfsstoffe wie Binder, Träger oder Stabilisator (für die Suspension) enthalten sein, vorzugsweise dann in einer Menge von 30 bis 70 Gew.-%, bezogen auf das Gesamtgewicht des Flußmittels.

Noch ein Gegenstand der Erfindung ist ein Flußmittel, welches brauchbar zum Löten von Aluminium und Aluminiumlegierungen ist und mehr als 5 Gew.-%, vorzugsweise mehr als 5 Mol-%, aber weniger als 100 Gew.-% Cesiumfluorzinkat sowie Kaliumfluoraluminat oder Cesiumfluoraluminat als Rest auf 100 Gew.-% enthält. Dieses Flußmittel enthält vorzugsweise mehr als 30 Gew.-%, insbesondere 50 oder mehr Gew.-% an Cesiumfluorzinkat. Vorteil dieses Flußmittels, welches gewünschtenfalls die üblichen Hilfsstoffe wie Binder, Träger oder Stabilisator enthalten kann, ist, daß man auch magnesiumhaltige Aluminiumlegierungen sehr gut löten kann. Dies wird auf das Cesium-Kation zurückgeführt.

Unter Verwendung des erfindungsgemäßen Flußmittels lassen sich Baugruppen aus verlöteten Teilen aus Aluminium oder Aluminiumlegierungen herstellen.

Die Herstellung der benötigten Alkalifluorzinkate kann auf verschiedene Weise erfolgen. Beispielsweise kann man Alkalifluorid, z. B. Cesiumfluorid oder Kaliumfluorid, mit Zinkfluorid im gewünschten Verhältnis aufschmelzen. Alternativ kann man in wäßriger Lösung arbeiten. So kann man aus wäßriger Lösung Alkalifluoride und Zinkfluorid unter Bildung von Alkalifluorzinkat zur Reaktion bringen und das ausgefallene Alkalifluorzinkat gewünschtenfalls isolieren. Hierzu wird eine Zinkfluorid-Lösung, die gewünschtenfalls frisch aus Zinkoxid und wäßriger HF hergestellt worden ist, mit einer Kaliumfluorid-Lösung, die gewünschtenfalls frisch aus Kaliumhydroxid und wäßriger HF erhalten worden ist, umgesetzt. Die Aufarbeitung erfolgt derart, daß man den ausgefallenen Feststoff von der wäßrigen überstehenden Lösung abtrennt und dann trocknet. Eine andere Vorgehensweise sieht vor, eine Lösung von Alkalibifluoriden (d. h. Addukte von HF und Alkalifluorid) mit Zinkoxid umzusetzen. So kann man das Alkalifluorid und/oder das Zinkfluorid durch Umsalzen anderer Alkali- bzw. Zinksalze mittels HF oder Alkali- oder Ammoniumbifluorid in der Lösung erzeugen.

Informationen über Phasendiagramme, basierend auf Thermo- und Röntgenanalysen, werden von O. Schmidt-Dumont und Horst Bornefeld in Z. anorg. allgem. Chem. 287 (1956), Seiten 120 bis 137 beschrieben. Informationen über Cs₄Zn₃F₁₀ werden von D. Babel in Z. Naturforsch. 20a (1965), Seiten 165 und 166 beschrieben. Eine neue Methode zur Herstellung von Fluorometallaten wird von M. K. Chaudhuri, S. K. Ghosh und Z. Hiese in J. Chem. Soc. Dalton Trans. (1984), Seiten 1763 bis 1964 beschrieben.

Anders als im Stand der Technik angenommen, eignen sich Alkalifluorzinkate als Flußmittel beim Aluminiumlöten bzw. Löten von Aluminiumlegierungen wie Mg-Al-Legierungen bei Temperaturen von 590 °C und weniger. Das Arbeiten im Vakuum mit Flußmittel-Dampf ist nicht nötig. Der Rückstand ist nicht korrosiv und kann überlackiert werden. Die Palette der bekannten Flußmittel wird in unvorhersehbarer Weise bereichert.

Die folgenden Beispiele sollen die Erfindung weiter erläutern ohne sie in ihrem Umfang einzuschränken.

### Beispiele

### Beispiel 1:

### Herstellung von Kaliumfluorozinkat (JF 009400)

Zinkoxid wird mit wäßriger HF zu einer Zinkfluorid-Lösung umgesetzt (Lösung 1). Lösung 1 wird unter Rühren zu einer zuvor hergestellten wäßrigen KF·HF-Lösung (Lösung 2 aus 23,3 g KF und 16 g HF) gegeben. Es wird eine Stunde nachgerührt und vom ausgefallenen Feststoff abfiltriert. Der Feststoff wird bei 110 °C im Umluftschrank getrocknet.
- Ausbeute:: 95,4 % der Theorie
- Analyse:: XRD bestätigt reines KZnF₃; Identifizierung mit Referenzspektrum DTA bis 650 °C keine erkennbare Phasenumwandlung

### Beispiel 2:

### Herstellung von Cesiumfluorozinkat (JF 009403)

30 g CsOH wird mit wäßriger HF zu CsF·HF in Lösung umgesetzt. Zu dieser Lösung wird unter Rühren 16,3 g Zinkoxid portionsweise zugegeben. Die Aufarbeitung erfolgt wie in Beispiel 1.
- Ausbeute:: 52,8 % der Theorie
- Analyse:: 33,9 % Cs, 37,9 % Zn XRD, kein Referenzspektrum vorhanden
- DTA:: mehrere Onsets, insbesondere bei 368,5 °C, 558,8 °C und 664,6 °C.

### Beispiel 3:

### Herstellung von Cesiumfluorozinkat (JF 009404)

60 g CsOH wird mit wäßriger HF zu CsF·HF in Lösung umgesetzt. Zu dieser Lösung wird unter Rühren 16 g Zinkoxid portionsweise zugegeben. Die Aufarbeitung erfolgt wie in Beispiel 1.
- Ausbeute:: 52,8 % der Theorie
- Analyse:: 49,0 % Cs, 27,2 % Zn XRD, kein Referenzspektrum vorhanden
- DTA:: kleiner Onset 499 °C, Hauptpeak bei 583 °C Onset.

### Beispiel 4:

### Herstellung von Cesiumfluorozinkat (JF 009415)

Wie in Beispiel 3, jedoch wird bei ca. 90 °C für 2,5 Stunden nachgerührt. Die Aufarbeitung erfolgt wie in Beispiel 1.
- Ausbeute:: 67,3 % der Theorie
- Analyse:: 58 % Cs 26,1 %Zn XRD, kein Referenzspektrum vorhanden.

### Beispiel 5:

### Herstellung von Cesiumfluorozinkat (JF 009418)

45 g CsOH wird mit wäßriger HF zu CsF·HF in Lösung umgesetzt. Zu dieser Lösung wird unter Rühren 16,3 g Zinkoxid portionsweise zugegeben und bei ca. 80 °C für 2 Stunden nachgerührt. Die Aufarbeitung erfolgt wie in Beispiel 1.
- Ausbeute:: 73,5 % der Theorie
- Analyse:: 85,5 %Cs 36,2 %Zn XRD, kein Referenzspektrum vorhanden.
- DTA:: Onsets bei 502,4 °C, 556,3 °C und 586,4 °C.

### Beispiel 6:

### Herstellung von Rubidiumfluorozinkat (JF 009420)

20,5 g RbOH wird mit wäßriger HF zu RbF·HF in Lösung umgesetzt. Zu dieser Lösung wird unter Rühren 16,3 g Zinkoxid portionsweise zugegeben. Die Aufarbeitung erfolgt wie in Beispiel 1.
- Ausbeute:: 93.8 % der Theorie
- Analyse:: XRD, Referenzspektrum 20 10 16.
- DTA:: Maxima bei 638,6 °C und 683,9 °C.

### Löttests

### Allgemeine Lötbedingungen:

Auf einem Aluminium- bzw. AlMg-Coupon [25x25 mm], mit bzw. ohne Lot oder Lotplattierung, wird, um eine homogene Verteilung des Flußmittels auf der Oberfläche zu erhalten, eine definierte Menge Flußmittel mit ein bis zwei Tropfen Isopropanol auf der Couponoberfläche verrieben. Anschließend wird dieser Coupon mit einem Aluminiumwinkel [ca. 45°, Lauge 40 mm, Höhe 5 mm] versehen und gewartet, bis das Isopropanol abgedampft ist. Dieser Coupon wird dann in den von einer kontrollierten Atmosphäre [Stickstoff Taupunkt -40 ° C] durchfluteten, vorgeheizten Lötofen [ca. 400 °C bei ZnAl-Loten, ca. 520 °C bei AlSi(Cu)-Loten] plaziert (sogenanntes CAB-Brazing) und auf Löttemperatur [Verlöten des Winkels mit dem Coupon, je nach Lot auf bis zu 590 °C] aufgeheizt [sogen. CAB Brazing Prozesses]. Nocolok® ist Kaliumfluoraluminat

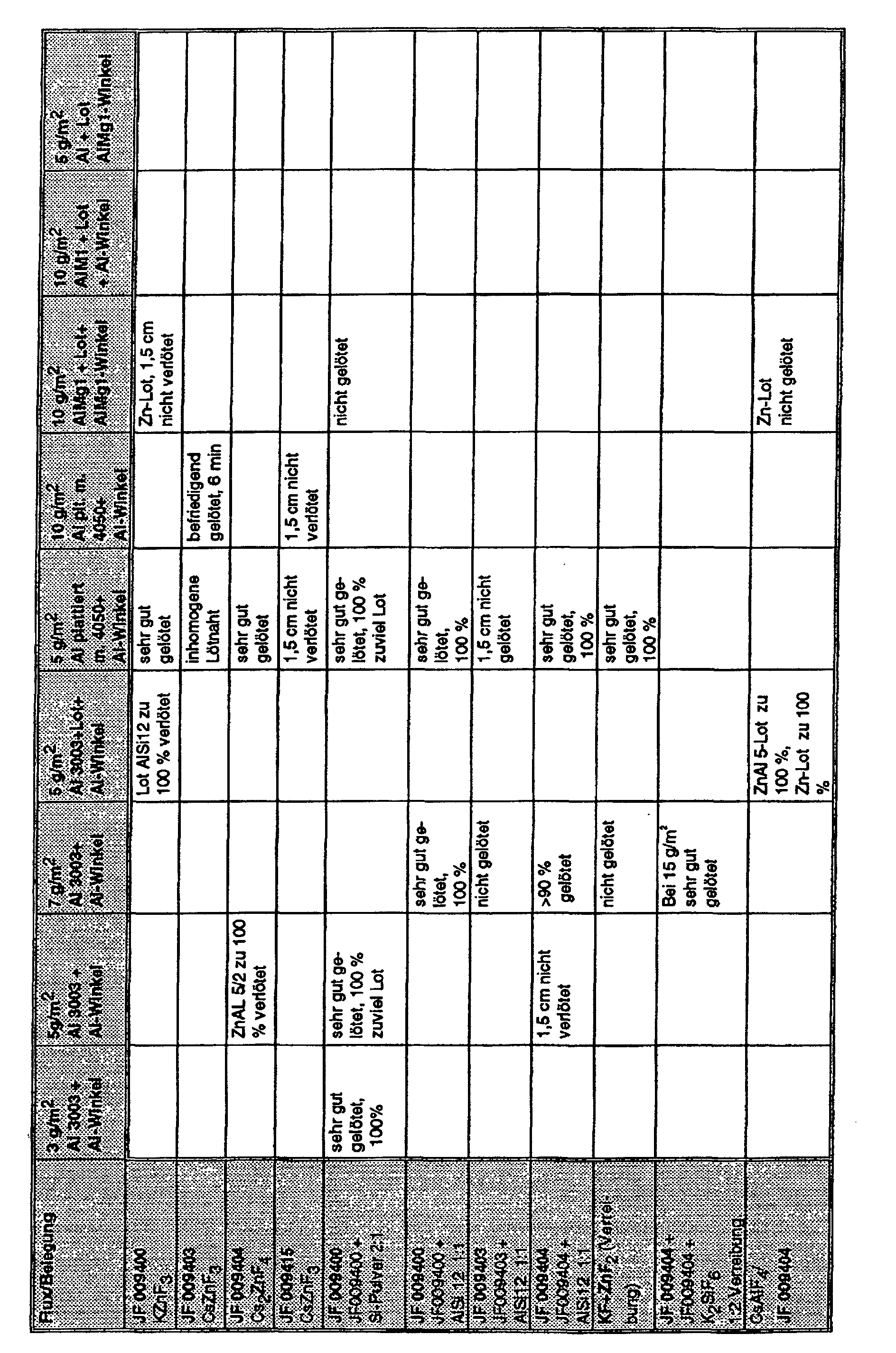

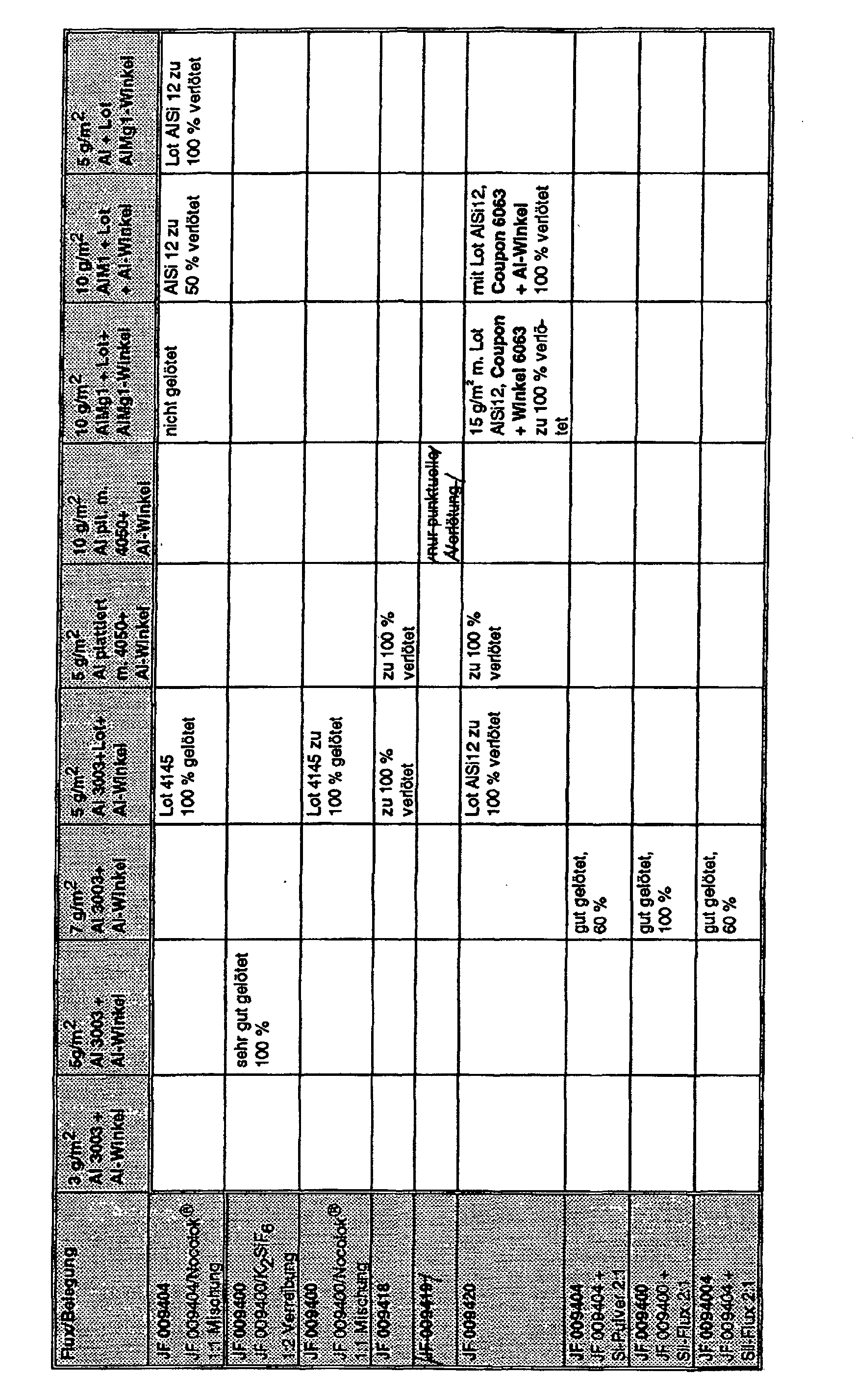

## Patentansprüche

1. Verfahren zum Löten von Aluminium und Aluminiumlegierungen, wobei das Flußmittel in fester Form, oder als organische Suspension aufgebracht wird und Alkalifluorzinkat oder Gemische von Alkalifluorid und Zinkfluorid enthält und man bei einer Temperatur im Bereich von 420 °C bis 590 °C lötet, wobei Alkali Kalium, Cesium oder Rubidium bedeutet.

2. Verfahren nach Anspruch 1, **dadurch gekennzeichnet, daß** im Flußmittel Kalium- und/oder Cesiumfluorzinkat enthalten ist.

3. Verfahren nach Anspruch 1, **dadurch gekennzeichnet, daß**, sofern Cesiumfluorzinkat im Flußmittel enthalten ist, dies in einer Menge von mehr als 5 Mol.-% vorliegt.

4. Verfahren nach Anspruch 1, **dadurch gekennzeichnet, daß** Kaliumfluorzinkat und/oder Cesiumfluorzinkat in einer Menge von mehr als 30 Gew.-% im Flußmittel enthalten ist.

5. Verfahren nach Anspruch 4, **dadurch gekennzeichnet, daß** Kaliumfluorzinkat und/oder Cesiumfluorzinkat in einer Menge von 50 oder mehr Gew.-% im Flußmittel enthalten ist.

6. Verfahren nach Anspruch 1, **dadurch gekennzeichnet, daß** das Flußmittel aus Alkalifluorzinkat oder aus Alkalifluorzinkat und Hilfsmittel besteht.

7. Verfahren nach Anspruch 1, **dadurch gekennzeichnet, daß** zusätzlich zum Alkalifluorzinkat Kaliumfluoraluminat oder Cesiumfluoraluminat in einer Menge von bis zu 95 Gew.-% enthalten ist.

8. Verfahren nach Anspruch 1 oder 6, **dadurch gekennzeichnet, daß** das Flußmittel Hilfsmittel wie Binder, Lotmetall, Lotmetall-Vorstufen oder Stabilisator für Suspensionen enthält.

9. Verfahren nach Anspruch 8, **dadurch gekennzeichnet, daß** das Flußmittel Alkalifluorsilikat, enthält, wobei Alkali Kalium, Cesium oder Rubidium bedeutet.

10. Verfahren nach Anspruch 9 zum lotfreien Löten von Aluminium und Aluminiumlegierungen, wobei das Flußmittel das Alkalifluorsilikat, insbesondere Kaliumfluorsilikat, in einer Menge von mindestens 5 bis 95 Gew.-% als Lotmetall-Vorstufe enthält.

11. Verfahren nach Anspruch 1, **dadurch gekennzeichnet, daß** das Flußmittel in Form einer alkoholischen Aufschlämmung eingesetzt wird.

12. Verfahren nach Anspruch 1, **dadurch gekennzeichnet, daß** man unter kontrollierter Atmosphäre lötet oder in der nichtoxidierenden Flamme.

13. Verfahren nach Anspruch 1, **dadurch gekennzeichnet, daß** man Mg-haltige Legierungen des Aluminiums lötet.

14. Flußmittel brauchbar zum Löten von Aluminium und Aluminiumlegierungen, enthaltend oder bestehend aus Cesiumfluorzinkat, Lotmetall-Vorstufe ausgewählt aus der Gruppe bestehend aus Silicium, Kupfer und Alkalimetallfluorsilikat, sowie gegebenenfalls Alkalimetallfluoraluminat, wobei Alkali Kalium, Cesium oder Rubidium bedeutet.

15. Flußmittel enthaltend oder bestehend aus 5 bis 95 Gew.-% Cesiumfluorzinkat und 5 bis 95 Gew.-% Lotmetall-Vorstufe ausgewählt aus der Gruppe bestehend aus Silicium, Kupfer oder Alkalifluorsilikat, wobei Alkali Kalium, Cesium oder Rubidium bedeutet.

16. Flußmittel nach Anspruch 14, **dadurch gekennzeichnet, daß** es 5 bis 90 Gew.-% Cesiumfluorzinkat , 5 bis 90 Gew.-% Lotmetall-Vorstufe und 5 bis 90 Gew.-% Kaliumfluoraluminat enthält oder daraus besteht.

17. Flußmittel enthaltend 5 bis 95 Gew.-% Cesiumfluorzinkat und 95 bis 5 Gew.-% Alkalifluorsilikat, oder daraus bestehend, wobei Alkali Kalium, Cesium oder Rubidium bedeutet.

## Claims

1. A process for soldering aluminium and aluminium alloys, wherein the flux is applied in solid form, or as an organic suspension, and contains alkali fluorozincate or mixtures of alkali fluoride and zinc fluoride, and soldering is effected at a temperature in the range from 420°C to 590°C, with "alkali" signifying potassium, caesium or rubidium.

2. A process according to Claim 1, **characterised in that** potassium fluorozincate and/or caesium fluorozincate is contained in the flux.

3. A process according to Claim 1, **characterised in that** if caesium fluorozincate is contained in the flux, it is present in a quantity of more than 5 mole percent.

4. A process according to Claim 1, **characterised in that** potassium fluorozincate and/or caesium fluorozincate is contained in a quantity of more than 30% by weight in the flux.

5. A process according to Claim 4, **characterised in that** potassium fluorozincate and/or caesium fluorozincate is contained in a quantity of 50 or more percent by weight in the flux.

6. A process according to Claim 1, **characterised in that** the flux consists of alkali fluorozincate or of alkali fluorozincate and auxiliary.

7. A process according to Claim 1, **characterised in that** potassium fluoroaluminate or caesium fluoroaluminate is contained in a quantity of up to 95% by weight in addition to the alkali fluorozincate.

8. A process according to Claim 1 or 6, **characterised in that** the flux contains auxiliaries such as binders, solder metal, solder-metal precursors or stabilisers for suspensions.

9. A process according to Claim 8, **characterised in that** the flux contains alkali fluorosilicate, with "alkali" signifying potassium, caesium or rubidium.

10. A process according to Claim 9 for the solder-free soldering of aluminium and aluminium alloys, wherein the flux contains the alkali fluorosilicate, in particular potassium fluorosilicate, in a quantity of at least 5 to 95% by weight as a solder-metal precursor.

11. A process according to Claim 1, **characterised in that** the flux is used in the form of an alcoholic slurry.

12. A process according to Claim 1, **characterised in that** soldering is effected in a controlled atmosphere or in a non-oxidising flame.

13. A process according to Claim 1, **characterised in that** Mg-containing alloys of aluminium are soldered.

14. A flux which can be used for soldering aluminium and aluminium alloys, containing or consisting of caesium fluorozincate, solder-metal precursor selected from the group consisting of silicon, copper and alkali metal fluorosilicate, and also optionally alkali metal fluoroaluminate, with "alkali" signifying potassium, caesium or rubidium.

15. A flux containing or consisting of 5 to 95% caesium fluorozincate and 5 to 95% by weight solder-metal precursor selected from the group consisting of silicon, copper or alkali fluorosilicate, with "alkali" signifying potassium, caesium or rubidium.

16. A flux according to Claim 14, **characterised in that** it contains or consists of 5 to 90% caesium fluorozincate, 5 to 90% solder-metal precursor and 5 to 90% by weight potassium fluoroaluminate.

17. A flux containing 5 to 95% by weight caesium fluorozincate and 95 to 5% by weight alkali fluorosilicate, or consisting thereof, with "alkali" signifying potassium, caesium or rubidium.

## Revendications

1. Procédé de brasage d'aluminium et d'alliages d'aluminium, dans lequel le flux est appliqué sous forme solide ou en tant que suspension organique et contient du fluorozincate de métal alcalin ou des mélanges de fluorure de métal alcalin et de fluorure de zinc et l'on brase à une température dans la gamme de 420°C à 590°C, métal alcalin signifiant potassium, césium ou rubidium.

2. Procédé selon la revendication 1, **caractérisé en ce que** du fluorozincate de potassium et/ou de césium est contenu dans le flux.

3. Procédé selon la revendication 1, **caractérisé en ce que**, lorsque du fluorozincate de césium est contenu dans le flux, il est présent en une quantité de plus de 5 % en moles.

4. Procédé selon la revendication 1, **caractérisé en ce que** du fluorozincate de potassium et/ou du fluorozincate de césium est contenu dans le flux en une quantité de plus de 30 % en poids.

5. Procédé selon la revendication 4, **caractérisé en ce que** du fluorozincate de potassium et/ou du fluorozincate de césium est contenu dans le flux en une quantité de 50 % en poids ou plus.

6. Procédé selon la revendication 1, **caractérisé en ce que** le flux est constitué de fluorozincate de métal/alcalin ou de fluorozincate de métal alcalin et d'un adjuvant.

7. Procédé selon la revendication 1, **caractérisé en ce que**, en plus du fluorozincate de métal alcalin, du fluoroaluminate de potassium ou du fluoroaluminate de césium est contenu en une quantité allant jusqu'à 95 % en poids.

8. Procédé selon la revendication 1 ou 6, **caractérisé en ce que** le flux contient des adjuvants comme liant, métal d'apport de brasage, précurseurs du métal d'apport de brasage ou stabilisant pour suspensions.

9. Procédé selon la revendication 8, **caractérisé en ce que** le flux contient du fluorosilicate de métal alcalin, métal alcalin signifiant potassium, césium ou rubidium.

10. Procédé selon la revendication 9 pour le brasage d'aluminium et d'alliages d'aluminium sans métal d'apport de brasage, dans lequel le flux contient le fluorosilicate de métal alcalin, en particulier le fluorosilicate de potassium, en une quantité d'au moins 5 à 95 % en poids en tant que précurseur du métal d'apport de brasage.

11. Procédé selon la revendication 1, **caractérisé en ce que** le flux est mis en oeuvre sous forme d'une suspension alcoolique.

12. Procédé selon la revendication 1, **caractérisé en ce que** l'on brase sous atmosphère contrôlée ou dans une flamme non oxydante.

13. Procédé selon la revendication 1, **caractérisé en ce que** l'on brase des alliages d'aluminium contenant du Mg.

14. Flux utilisable pour le brasage d'aluminium et d'alliages d'aluminium, contenant ou constitué par du fluorozincate de césium, un précurseur du métal d'apport de brasage choisi dans le groupe composé du silicium, du cuivre et d'un fluorosilicate de métal alcalin, ainsi que, le cas échéant, un fluoroaluminate de métal alcalin, métal alcalin signifiant potassium, césium ou rubidium.

15. Flux contenant ou constitué de 5 à 95 % en poids de fluorozincate de césium et de 5 à 95 % en poids de précurseur du métal d'apport de brasage choisi dans le groupe composé du silicium, du cuivre ou d'un fluorosilicate de métal alcalin, métal alcalin signifiant potassium, césium ou rubidium.

16. Flux selon la revendication 14, **caractérisé en ce qu'**il contient de 5 à 90 % en poids de fluorozincate de cæsium, 5 à 90 % en poids de précurseur du métal d'apport de brasage et 5 à 90 % en poids de fluoroaluminate de potassium ou bien en est constitué.

17. Flux contenant de 5 à 95 % en poids de fluorozincate de césium et 95 à 5 % en poids de fluorosilicate de métal alcalin, ou en étant constitué, métal alcalin signifiant potassium, césium ou rubidium.
